# EUROPÄISCHE PATENTSCHRIFT

(11) **EP 2 226 289 B1**
(45) Veröffentlichungstag und Bekanntmachung des Hinweises auf die Patenterteilung: **10.10.2012**
(21) Anmeldenummer: 10001280.6
(22) Anmeldetag: 08.02.2010
(51) Int. Cl.: B66F 9/075, B60K 15/067, B60K 15/07

(54) **Gegengewichtsgabelstapler mit einem Treibstoffbehälter**
Counterbalance fork-lift truck with a fuel container
Chariot élévateur avec contrepoids doté d'un récipient à carburant

(30) Priorität: 06.03.2009 DE 102009011577; 06.05.2009 DE 102009020082
(43) Veröffentlichungstag der Anmeldung: 08.09.2010
(73) Patentinhaber: STILL GmbH, 22113 Hamburg (DE)
(72) Erfinder: Szymanski, Marek, 21465 Wentorf (DE); Gonnsen, Boy, 25920 Risum-Lindholm (DE)
(74) Vertreter: Geirhos, Johann

(56) Entgegenhaltungen:
- GB-A- 2 376 219
- JP-A- 7 223 447
- US-A- 4 059 281
- US-A1- 2008 042 028

## Beschreibung

Die Erfindung betrifft einen Gegengewichtsgabelstapler mit einem verbrennungsmotorischen Antriebssystem, einem Gegengewicht und einem Kraftstoffbehälter, der auf dem Gegengewicht angeordnet ist, und mit einer Halterung für den Kraftstoffbehälter.

Bei verbrennungsmotorisch betriebenen Gegengewichtsgabelstaplern sind Ausführungen mit einem Treibgasmotor bekannt, wobei als Kraftstoffbehälter ein Treibgastank oder eine Treibgasflasche auf dem Gegengewicht angeordnet ist.

Während des Betriebs ist bei einem Treibgasstapler ein von einer Treibgasflasche gebildeter Kraftstoffbehälter auszutauschen. Hierzu ist eine leere Treibgasflasche aus einer Halterung auf dem Gegengewicht zu entnehmen und gegen eine volle Treibgasflasche auszutauschen. Durch die Anordnung der Halterung auf dem Gegengewicht führen das Anheben der vollen Treibgasflasche aus der Halterung und das Hineinheben der Treibgasflasche in die Halterung zu einer ungünstigen Ergonomie.

Ein gattungsgemäßer Treibgasstapler ist aus der DE 197 29 276 B4 bekannt. Um den Wechsel der Treibgasflasche zu erleichtern, ist ein mit bügelförmigen Halteklammern für die Treibgasflasche versehener Schwenkarm vorgesehen, der schwenkbar am Gegengewicht gelagert ist. Eine derartige Halterung der Treibgasflasche in einem schwenkbaren Schwenkarm weist jedoch einen hohen Bauaufwand auf.

Die US 2008/0042028 A1 offenbart einen Gegengewichtsgabelstapler mit einer Gasflaschenhalterung, die an einer Stützkonstruktion befestigt ist. Die Gasflaschenhalterung besteht aus einem Schwenkträger, der über ein Schwenklager um eine vertikale Schwenkachse schwenkbar am Gabelstapler gelagert ist. An dem Schwenkträger ist über zwei Hebel eine Wanne, in der die Gasflasche angeordnet ist, im Sinne eines Parallelgramms nach unten klappbar angeordnet. Zum Wechsel der Gasflasche wird der Schwenkträger verschwenkt, so dass anschließend die Wanne mit den beiden Hebeln nach unten verschwenkt werden kann, um den Wechsel der Gasflasche zu erleichtern.

Die GB 2 376 219 A offenbart eine vergleichbare Gasflaschenhalterung mit einem nach unten klappbaren Schwenkträger, der auf dem Gegengewicht eines Gegengewichtsgabelstaplers angeordnet ist. Eine plattenförmige Grundplatte der Gasflaschenhalterung ist auf dem Gegengewicht befestigt und ist mit einer Schwenkachse für einen um die Schwenkachse schwenkbare und anschließend um eine Klappachse nach unten klappbaren bügelförmigen Träger versehen, in dem die Gasflasche gehaltert ist.

Die JP 7-223447 A offenbart einen Gegengewichtsgabelstapler, bei dem gemäß den Figuren 3 bis 5 ein Gasflaschenhalter von einem Träger mit drei Stäben gebildet ist, der an den hinteren Säulen des Fahrerschutzdaches verschwenkbar angeordnet ist. In dem Ausführungsbeispiel der Figur 7 der JP 7-223447 A liegt die Gasflasche in einem direkt in dem Gegengewicht ausgebildeten halbzylinderförmigen Aufnahmeraum, der mittels eines Deckels abdeckbar ist.

Die US 4 059 281 offenbart eine schwenkbare Halterung eines Gastanks oberhalb eines Fahrzeugkörpers eines Flurförderzeugs, wobei die Halterung mit einer klappbaren Haube gekoppelt ist, um beim Öffnen der Haube nach hinten verschwenkt zu werden.

Der vorliegenden Erfindung liegt die Aufgabe zugrunde, eine einfache aufgebaute Halterung zur Verfügung zu stellen, die einen ergonomischen Wechsel des Kraftstoffbehälters ermöglicht.

Diese Aufgabe wird erfindungsgemäß dadurch gelöst, dass die Halterung von einem plattenförmigen Trägerelement gebildet ist, in dem eine wannenförmige Aufnahmemulde zur Aufnahme des Kraftstoffbehälters ausgebildet ist, wobei das plattenförmige Trägerelement eine obere Abdeckung und Verkleidung des Gegengewichts bildet. Bei einer derartigen Halterung, die von einem plattenförmigen Trägerelement gebildet ist, das mit einer wannenförmigen Aufnahmemulde zur Aufnahme des Kraftstoffbehälters versehen ist, ist eine verbesserte Ergonomie beim Auswechseln eines als Treibgasflasche ausgebildeten Kraftstoffbehälters erzielbar, da die leere Treitagasflasche aus der Aufnahmemulde des plattenförmigen Trägerelements mit geringem Kraftaufwand angehoben bzw. herausgezogen werden kann und die volle Treibgasflasche auf dem Trägerelement abgelegt und in die wannenförmige Aufnahmemulde hineingehoben werden kann. Die Treibgasflachse kann hierbei in der wannenförmigen Aufnahmemulde auf einfache Weise während des Betriebs des Gegengewichtstaplers befestigt und gesichert werden. Zudem ergibt sich ein geringer Herstellaufwand, da ein plattenförmiges Trägerelement mit einer wannenförmigen Aufnahmemulde für den Kraftstoffbehälter auf einfache Weise hergestellt werden kann. Das Trägerelement bildet gleichzeitig die obere Abdeckung und Verkleidung des Gegengewichts und stellt ein Designelement dar, wodurch die Befestigung des Treibgasbehälters auf dem Gegengewicht auf einfache Weise und mit geringem Bauaufwand erzielt wird. Die Aufnahmemulde in dem Trägerelement ergibt hierbei eine tiefe und teilweise versenkte Anordnung des Kraftstoffbehälters auf dem Gegengewicht, die einen ergonomisch günstigen Wechsel des Kraftstoffbehälters ermöglicht.

Das plattenförmige Trägerelement kann gemäß einer bevorzugten Ausführungsform von einem metallischen Halteblech gebildet werden. Ein derartiges Halteblech kann auf einfache Weise, beispielsweise durch Ziehverfahren oder Pressverfahren hergestellt und mit der wannenförmigen Aufnahmemulde versehen werden.

Zudem kann das plattenförmige Trägerelement gemäß alternativer Ausführungsformen der Erfindung von einem Kunststoffträger oder einem Verbundwerkstoffträger gebildet werden. Ein aus Kunststoff bestehendes Trägerelement kann auf einfache Weise beispielsweise in einem Spritzgussverfahren hergestellt und mit der wannenförmigen Aufnahmemulde versehen werden. Gleiches gilt für ein Trägerelement aus einem Verbundwerkstoff, beispielsweise Composite, das ebenfalls auf einfache Weise hergestellt und mit der wannenförmigen Aufnahmemulde für den Kraftstoffbehälter versehen werden kann.

Mit besonderem Vorteil weist die wannenförmige Aufnahmemulde gemäß einer Ausführungsform einen im Wesentlichen kreissegmentförmigen Querschnitt auf. In einer derartigen Aufnahmemulde des Trägerelements kann eine Treibgasflasche oder ein Treibgastank sicher angeordnet werden. Zudem ist eine derartige Aufnahmemulde auf einfache Weise in dem Trägerelement, insbesondere einem Halteblech herstellbar.

Zudem kann die wannenförmige Aufnahmemulde einen im Wesentlichen trapezförmigen Querschnitt aufweisen. In einer derartigen Aufnahmemulde kann ebenfalls eine Treibgasflasche oder ein Treibgastank sicher befestigt werden. Ein derartiger Querschnitt der Aufnahmemulde kann bei einem Kunststoffträger oder Verbundwerkstoffträger Vorteile hinsichtlich einer günstigen Herstellbarkeit ergeben.

Gemäß einer vorteilhaften Weiterbildungsform der Erfindung sind in der Aufnahmemulde zumindest zwei Auflager für den Kraftstoffbehälter ausgebildet, wodurch der Kraftstoffbehälter, insbesondere eine Treibgasflasche, sicher in der Aufnahmemulde befestigt werden kann.

Zweckmäßigerweise sind die Auflager von jeweils einer in Längsrichtung der Aufnahmemulde verlaufenden Auflagerleiste gebildet. Derartige Auflagerleisten im Bereich der wannenförmigen Aufnahmemulde können in dem Trägerelement auf einfache Weise, beispielsweise einem Ziehverfahren oder einem Pressverfahren eines Halteblechs oder im Spritzgussverfahren eines Kunststoffträgers, hergestellt werden. Durch die Abstützung an zwei Punkten bzw. zwei Linien des Umfangs bei zylinderförmigen Kraftstoffbehältern wird dieser sicher gehalten und kann sich nicht relativ zu dem Trägerelement bewegen, wie wenn eine Treibgasflasche in einer kreissegmentförmigen oder trapezförmigen Aufnahmemulde liegt, deren Radius bzw. Querschnitt nicht exakt an die Form der Treibgasflasche angepasst ist.

Sofern an den Auflagerleisten Dämpfungsmittel, insbesondere schwingungsdämpfende Gummielemente, befestigbar sind, kann eine Abkopplung des Kraftstoffbehälters von Schwingungen und Erschütterungen während des Betriebs des Gegengewichtsgabelstaplers auf einfache Weise erzielt werden.

Zudem kann die Unterseite des Trägerelements zumindest im Bereich des Kraftstoffbehälters mit Dämmmaterial versehen werden, wodurch der Kraftstoffbehälter auf einfache Weise vor der Abwärme des Verbrennungsmotors oder einer Kühlereinrichtung des Gabelstaplers geschützt werden kann.

Gemäß einer zweckmäßigen Weiterbildung der Erfindung ist in dem Trägerelement, insbesondere im tiefsten Punkt der wannenförmigen Aufnahmemulde, eine Leckagesicke mit mindestens einer Ablauföffnung ausgebildet. In einer derartigen Leckagesicke kann bei einem Betrieb des Gabelstaplers im Freien mögliches Regenwasser in der Aufnahmemulde auf einfache Weise aufgefangen und der Ablauföffnung zugeführt werden, wodurch ein sicherer Betrieb ermöglicht wird. Eine derartige Leckagesicke mit der Ablauföffnung ist ebenfalls in dem Trägerelement auf einfache Weise, beispielsweise einem Ziehverfahren oder einem Pressverfahren des Halteblechs oder einem Spritzgussverfahren des Kunststoffträgers, herstellbar.

Die Leckagesicke ist hierbei zweckmäßigerweise in der wannenförmigen Aufnahmemulde des plattenförmigen Trägerelements zwischen den beiden Auflagerleisten angeordnet.

Gemäß einer zweckmäßigen Ausgestaltungsform der Erfindung ist das plattenförmige Trägerelement an der Oberseite des Gegengewichts angeordnet und deckt das Gegengewicht zumindest teilweise, insbesondere vollständig, ab. Bei einer Treibgasflasche wird somit eine tiefe Anordnung erzielt, die eine günstige Ergonomie beim Wechsel der Treibgasflasche ermöglicht.

Bei einem derartigen, als oberes Verkleidungsblech des Gegengewichts ausgebildeten plattenförmigen Trägerelement ergeben sich besondere Vorteile, wenn an dem Trägerelement mindestens eine Durchführungsausnehmung für eine Abgasanlage und/oder eine Luftansaugeinrichtung und/oder eine Kühleranlage ausgebildet ist. Derartige Durchführungsausnehmungen können in dem Trägerelement auf einfache Weise hergestellt werden und ermöglichen es auf einfache Weise, ein Auspuffrohr und/oder einen Luftansaugstutzen für den Verbrennungsmotor durch das Trägerelement zu führen und/oder einen Kühlwasserauffüllstutzen für eine Kühleranlage zugänglich zu machen, die in der Regel innerhalb des Gegengewichts angeordnet ist.

Das plattenförmige Trägerelement ist gemäß einer bevorzugten Ausführungsform der Erfindung an dem Gegengewicht lösbar befestigt, insbesondere mittels zumindest einer Schraubverbindung, wodurch das Trägerelement auf einfache Weise an dem Gegengewicht befestigt werden kann.

Mit besonderem Vorteil ist an dem plattenförmigen Trägerelement eine Befestigungseinrichtung für den Kraftstoffbehälter befestigbar.

Die Befestigungseinrichtung kann von zumindest einem Spannband gebildet sein, das an dem Trägerelement einhängbar oder einfädelbar ist, wodurch insbesondere eine Treibgasflasche oder ein Treibgastank auf einfache Weise in der wannenförmigen Aufnahmemulde des Trägerelements befestigt und gesichert werden kann. Das Spannband kann hierbei von einem metallischen Spannband oder einem textilen Spannband gebildet werden.

Zweckmäßigerweise ist das plattenförmige Trägerelement zum Einhängen oder Einfädeln des Spannbandes mit langlochförmigen Ausnehmungen versehen. In derartigen Langlöchern des Trägerelements kann ein Spannband auf einfache Weise eingehängt oder eingefädelt werden, um den Kraftstoffbehälter zu befestigen.

Die Befestigungseinrichtung kann ebenfalls von mindestens einer Halteklammer gebildet werden, wobei die Halteklammer an dem plattenförmigen Trägerelement lösbar befestigbar ist. Mit derartigen Halteklammern kann insbesondere ein als Dieseltank ausgebildeter Kraftstofftank an dem Trägerelement auf einfache Weise befestigt werden.

Sofern das Trägerelement zur Befestigung der Halteklammer mit einem Durchgangsloch für eine Verschraubung versehen ist, kann die Halteklammer auf einfache Weise mittels einer entsprechenden Verschraubung an dem Trägerelement befestigt werden.

Der Kraftstoffbehälter kann als Treibgasflasche ausgebildet sein. Mit dem erfindungsgemäßen Trägerelement kann eine austauschbare Treibgasflasche eines als Treibgasstapler ausgebildeten Gegengewichtsgabelstaplers mit einem Treibgasmotor auf einfache Weise auf dem Gegengewicht befestigt werden, wodurch durch die wannenförmige Aufnahmemulde weiterhin eine tiefe und teilweise versenkte Anordnung der Treibgasflasche am Gegengewicht erzielt wird, die eine günstige Ergonomie beim Wechsel der Treibgasflasche ergibt.

Bei einem Treibgasstapler mit einem Treibgasmotor kann der Kraftstoffbehälter auch alternativ als Treibgastank gebildet werden. In der wannenförmigen Aufnahmemulde des Trägerelements kann ein fest angebauter Treibgastank auf einfache und sichere Weise auf dem Gegengewicht angeordnet und befestigt werden.

Zudem kann der Kraftstoffbehälter von einem Kraftstofftank, insbesondere einem Dieseltank, gebildet sein, wobei bei einem Dieselstapler mit einem Dieselmotor eine sichere und günstige Befestigung des Dieseltanks in der wannenförmigen Aufnahmemulde des Trägerelements erzielbar ist.

Besondere Vorteile ergeben sich bei einer Gegengewichtsgabelstaplerflotte umfassend zumindest einen Dieselstapler mit einem als Dieselmotor ausgebildeten Verbrennungsmotor und zumindest einen Treibgasstapler mit einem als Treibgasmotor ausgebildeten Verbrennungsmotor, wobei die Gegengewichtsgabelstapler jeweils ein Gegengewicht aufweisen, wobei zur Befestigung eines Kraftstofftanks, insbesondere eines Dieseltanks, des Dieselstaplers und einer Treibgasflasche oder eines Treibgastanks des Treibgasstaplers ein identisches plattenförmiges Trägerelement vorgesehen ist, das mit Befestigungseinrichtungen für einen Kraftstofftank, insbesondere Dieseltank, und Befestigungseinrichtungen für eine Treibgasflasche oder einen Treibgastank versehen ist. Mit einem erfindungsgemäßen Trägerelement, an dem sowohl bei einem Dieselstapler der Gegengewichtsgabelstaplerflotte ein Dieseltank bzw. bei einem Treibgasstapler der Gegengewichtsgabelstaplerflotte eine Treibgasflasche oder ein Treibgastank befestigt werden kann, können mit identischen Trägerelementen die unterschiedlichen Kraftstoffbehälter eines Dieselstaplers oder eines Treibgasstaplers auf dem Gegengewicht befestigt werden, wodurch bei der Gabelstaplerflotte mit Dieselstaplern und Treibgasstaplern die unterschiedlichen Kraftstoffbehälter mit geringem Bauaufwand auf dem Gegengewicht angeordnet und befestigt werden können.

Weitere Vorteile und Einzelheiten der Erfindung werden anhand der in den schematischen Figuren dargestellten Ausführungsbeispiele näher erläutert. Hierbei zeigen
- Figur 1: einen erfindungsgemäßen Gegengewichtsgabelstapler in einer perspektivischen Ansicht,
- Figur 2: ein erfindungsgemäßes Trägerelement in einer Draufsicht,
- Figur 3: einen Schnitt entlang der Linie A-A der Figur 2,
- Figur 4: eine Ausführung des Gegengewichtsgabelstaplers gemäß der Figur 1 als Treibgasstapler,
- Figur 5: eine weitere Ausführung des Gegengewichtsgabelstaplers gemäß der Figur 1 als Treibgasstapler und
- Figur 6: eine Ausführung des Gegengewichtsgabelstaplers gemäß der Figur 1 als Dieselstapler.

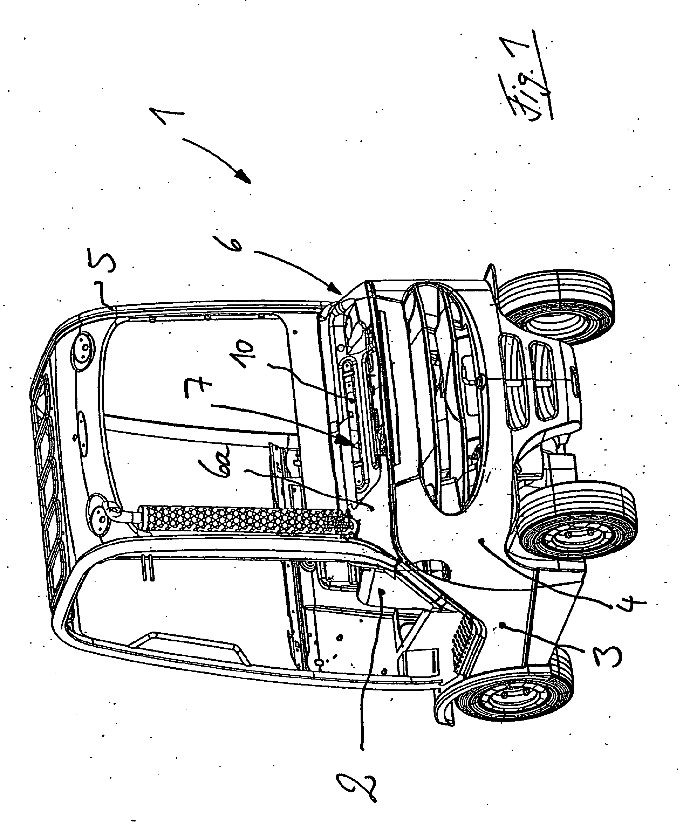

In der Figur 1 ist ein erfindungsgemäßer Gegengewichtsgabelstapler 1 in einer perspektivischen Heckansicht dargestellt. Der Gegengewichtsgabelstapler 1 weist einen nicht mehr dargestellten, innerhalb eines Aggregateraums 2 angeordneten Verbrennungsmotor auf. An einem Rahmenabschnitt 3 ist ein heckseitiges Gegengewicht 4 des Gegengewichtsgabelstaplers 1 angeordnet. Dargestellt ist weiterhin ein Fahrerschutzdach 5, innerhalb dessen ein Fahrerarbeitsplatz angeordnet ist.

Erfindungsgemäß ist an der Oberseite des Gegengewichts 4 ein plattenförmiges Trägerelement 6 angeordnet und auf nicht mehr dargestellte Weise befestigt, das die Oberseite des Gegengewichts 4 vollständig abdeckt und sich bis zu der Rückseite des Fahrerschutzdaches 5 erstreckt. An den Seitenbereichen erstreckt sich das Trägerelement 6 mit seitlichen Erweiterungen in Richtung der Seitenteile des Rahmenabschnitts 3, so dass das Trägerelement 6 den Bereich zwischen dem Gegengewicht 4, dem Rahmenabschnitt 3 und dem Fahrerschutzdach 5 vollständig nach oben abdeckt und die Kontur des Gegengewichtsgabelstaplers 1 bestimmt. An der Oberseite ist das Trägerelement 6 mit einer wannenförmigen Aufnahmemulde 7 versehen, die zur Aufnahme eines in der Figur 1 nicht mehr dargestellten Kraftstoffbehälters dient und somit eine Halterung für den Kraftstoffbehälter bildet. In der dargestellten Ausführungsform ist das plattenförmige Trägerelement 6 von einem metallischen Halteblech 6a gebildet.

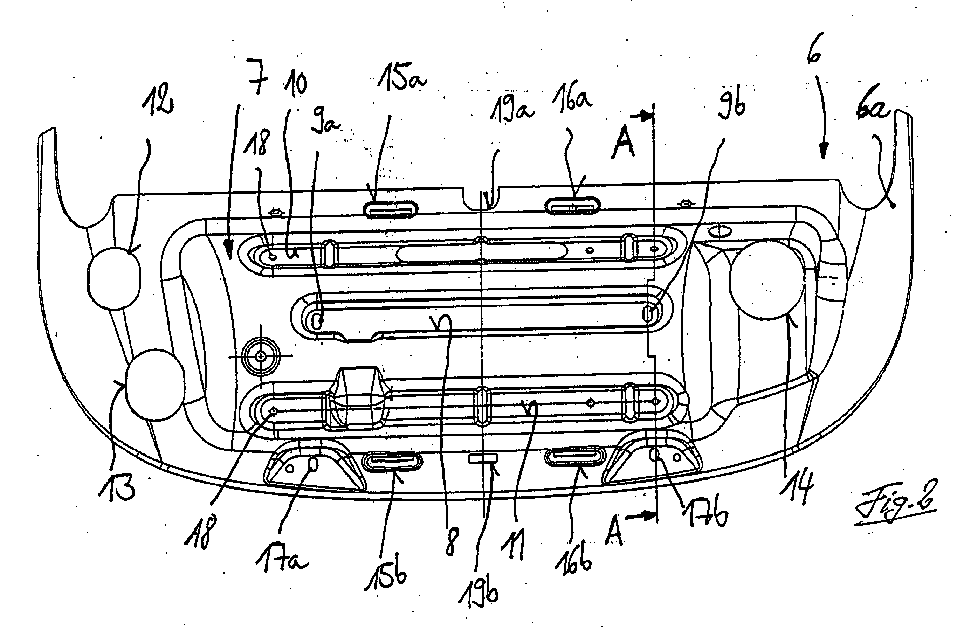

In der Figur 2 ist das als Halteblech 6a ausgebildete Trägerelement 6 in einer Draufsicht dargestellt, wobei die an der Oberseite des Haltebleches 6a angeordnete und wannenförmig ausgebildete Aufnahmemulde 7 zu sehen ist.

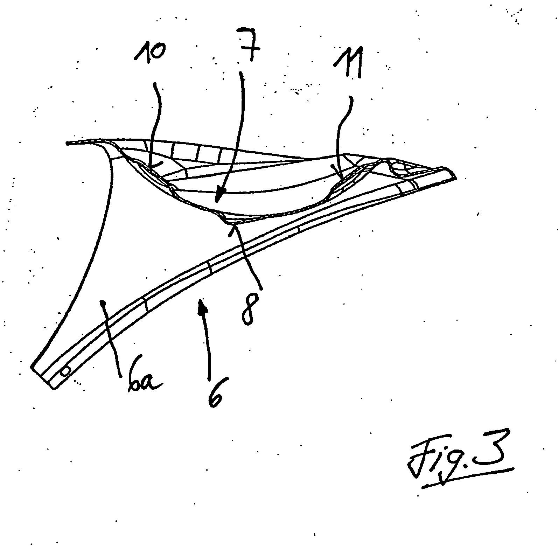

In der Figur 3 ist das als Halteblech 6a ausgebildete Trägerelement 6 in einem Querschnitt entlang der Linie A-A der Figur 2 dargestellt. Die wannenförmige Aufnahmemulde 7 für den Kraftstoffbehälter weist einen im Wesentlichen kreissegmentförmigen Querschnitt auf. Im mittleren Bereich der wannenförmigen Aufnahmemulde 7 ist eine als Längssicke ausgebildete Leckagesicke 8 angeordnet, die an den längsseitigen Enden mit jeweils einer Ablauföffnung 9a, 9b versehen ist. Die Leckagesicke 8 ist an der wannenförmigen Aufnahmemulde 7 nach Außen weisend in dem Halteblech 6a eingeformt.

Beiderseits der mittig angeordneten Leckagesicke 8 ist an der wannenförmigen Aufnahmemulde 7 des Haltebleches 6a im umfangsseitig äußeren Bereich der Aufnahmemulde 7 jeweils ein Auflager 10, 11 für den Kraftstoffbehälter ausgebildet. Die Auflager 10, 11 sind von jeweils einer in Längsrichtung der Aufnahmemulde 7 verlaufenden, sickenförmigen Auflagerleiste gebildet, die in dem Halteblech 6a im Bereich der Aufnahmemulde 7 nach Innen weisend eingeformt sind.

An den Auflagerleiste 10, 11 sind - wie in der Figur 2 gezeigt - Befestigungslöcher 18 ausgebildet, an denen nicht näher dargestellte Dämpfungsmittel, beispielsweise schwingungsdämpfende Gummielemente, zur Schwingungsentkopplung des Kraftstoffbehälters befestigt werden können.

Im linken Bereich des Haltebleches 6a ist neben der wannenförmigen Aufnahmemulde 7 für den Kraftstoffbehälter eine bohrungsförmige Durchführungsausnehmung 12 für ein Abgasrohr einer Abgasanlage ausgebildet. Zudem kann in diesem Bereich des Halteblechs 6a eine bohrungsförmige Durchführungsausnehmung 13 angeordnet werden, durch die ein Luftansaugstutzen für eine Luftansaugeinrichtung des Verbrennungsmotors geführt werden kann. Im rechten Bereich des Haltebleches 6a ist neben der wannenförmigen Aufnahmemulde 7 für den Kraftstoffbehälter eine bohrungsförmige Durchführungsausnehmung 14 angeordnet, die eine Wartungsöffnung für eine Kühlereinrichtung bildet, um beispielsweise Kühlflüssigkeit aufzufüllen und den Kühlflüssigkeitsstand zu kontrollieren.

In der Figur 2 sind weiterhin langlochförmige Ausnehmungen 15a, 15b und 16a, 16b zu erkennen, die in dem Halteblech 6a im vorderen, dem Fahrerschutzdach zugewandten Bereich und im hinteren, der Heckseite zugewandeten Bereich jeweils gegenüberliegend im Bereich der wannenförmigen Aufnahmemulde 7 angeordnet sind. Die Ausnehmungen 15a, 15b und 16a, 16b sind hierbei bezüglich einer Längsmittelebene des Haltebleches 6a jeweils paarweise seitlich beabstandet. In den Ausnehmungen 15a, 15b sowie den hierzu seitlich beabstandeten Ausnehmungen 16a, 16b können ein oder mehrere Spannbänder eingehängt werden, die als Befestigungseinrichtung für den in der wannenförmigen Aufnahmemulde 7 angeordneten Kraftstoffbehälter dienen.

Im mittleren Bereich und somit im Bereich der Längsmittelebene des Halteblechs 6a ist im vorderen, dem Fahrerschutzdach zugewandten Bereich und im hinteren, der Heckseite zugewandeten Bereich jeweils gegenüberliegend im Bereich der wannenförmigen Aufnahmemulde 7 eine langlochförmige Ausnehmung 19a, 19b ausgebildet, in der ein mittig angeordnetes Spannband eingehängt oder eingefädelt werden kann, um eine Befestigungseinrichtung für den in der wannenförmigen Aufnahmemulde 7 angeordneten Kraftstoffbehälter zu bilden.

Zudem sind an dem Halteblech 6a im hinteren, der Heckseite zugewandeten Bereich jeweils seitlich nach außen zu den Ausnehmungen 15b, 16b beabstandet Mulden mit Durchgangslöchern 17a, 17b angeordnet, in denen jeweils eine Halteklammer befestigt werden kann, um einen in der wannenförmigen Aufnahmemulde 7 angeordneten Kraftstoffbehälter zu befestigen.

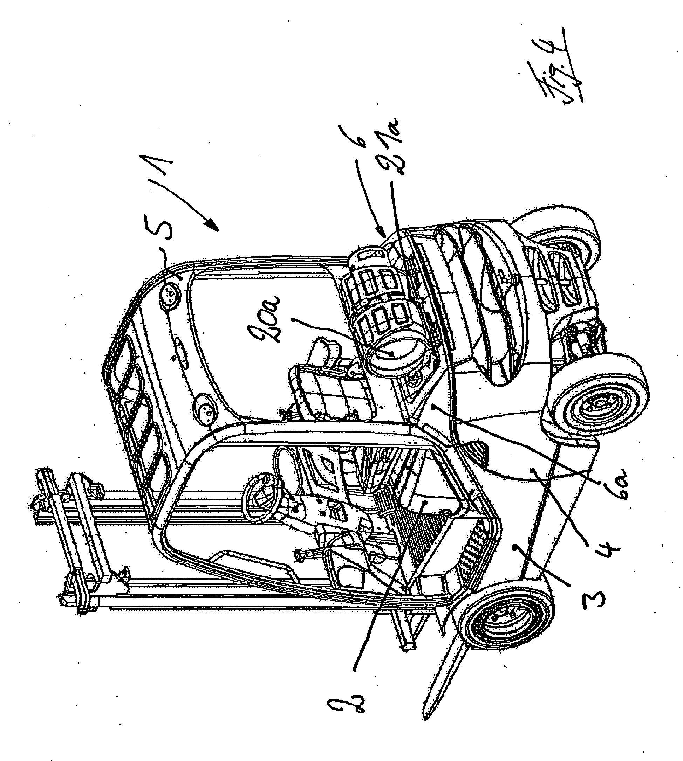

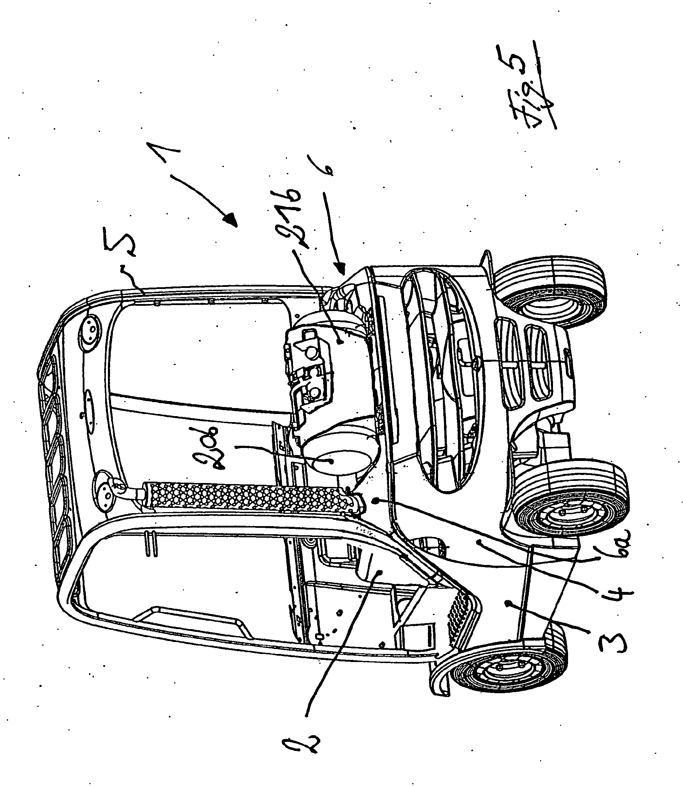

In den Figuren 4 und 5 ist jeweils ein als Treibgasstapier ausgebildeter Gegengewichtsgabelstapler 1 dargestellt, wobei in der wannenförmigen Aufnahmemulde 7 des die Oberseite des Gegengewichts 4 abdeckenden Haltebleches 6a ein als Treibgasflasche 20a (Figur 4) bzw. als Treibgastank 20b (Figur 5) ausgebildeter Kraftstoffbehälter angeordnet und eingelegt ist. Zur Befestigung der Treibgasflasche 20a gemäß der Figur 4 ist ein mittig angeordnetes Spannband 21a, insbesondere ein textiles Spannband, vorgesehen, das in den mittig angeordneten Ausnehmungen 19a, 19b des Halteblechs 6a eingefädelt werden kann. Zur Befestigung des Treibgastanks 20b gemäß der Figur 5 ist ein Spannband 21b, insbesondere eine metallisches Spannband, vorgesehen, das in den langlochförmigen Ausnehmungen 15a, 15b und 16a, 16b des Haltbleches 6a eingehängt werden kann.

Das Halteblech 6a mit der wannenförmigen Aufnahmemulde 7 ermöglicht eine tiefe und teilweise versenkte Anordnung der Treibgasflasche 20a auf dem Gegengewicht 4. Nach dem Entfernen des Spannbandes 21 a kann eine leere Treibgasflasche 20a in ergonomisch günstiger Weise aus der wannenförmigen Aufnahmemulde 7 des Haltebleches 6a herausgehoben werden und gegen eine volle Treibgasflasche 20a ausgetauscht werden, wobei die volle Treibgasflasche 20a ergonomisch günstig in die wannenförmige Vertiefung hineingelegt werden kann und mittels des in die langlochförmigen Ausnehmungen 19a, 19b einhängbaren bzw. einfädelbaren Spannbandes 21a in der wannenförmigen Aufnahmemulde 7 an dem Halteblech 6a befestigt werden kann.

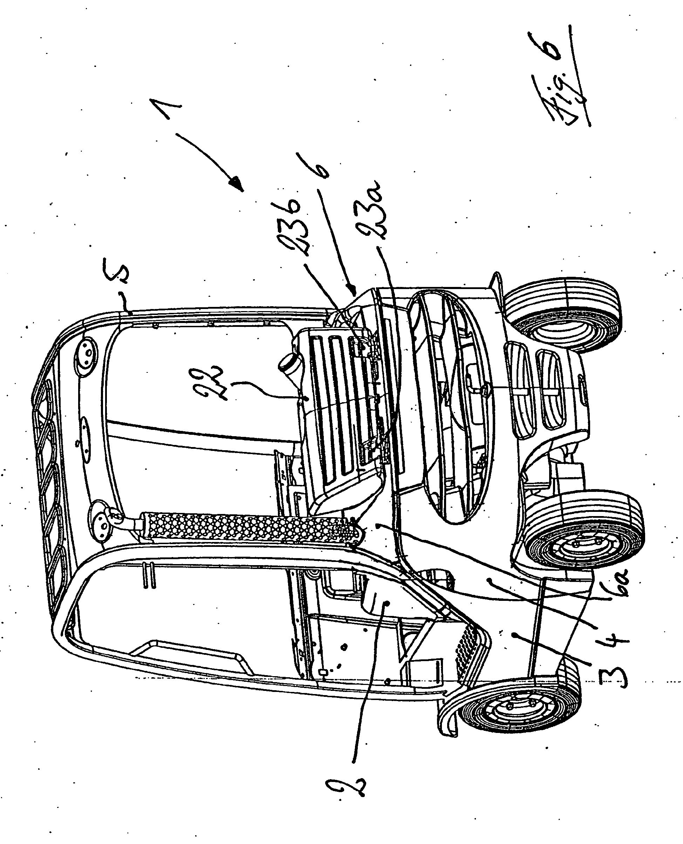

Die Figur 6 zeigt einen als Dieselstapler ausgebildeten Gegengewichtsgabelstapler 1, wobei in der wannenförmigen Aufnahmemulde 7 des die Oberseite des Gegengewichts 4 abdeckenden Haltebleches 6a ein als Dieseltank 22 ausgebildeter Kraftstofftank angeordnet ist. Zur Befestigung des Dieseltanks 22 sind Halteklammern 23a, 23b vorgesehen, die an den Durchgangslöchern 17a, 17b des Haltebleches 6a befestigt werden, beispielsweise mittels entsprechender Schraubverbindungen.

Mit dem erfindungsgemäßen, beispielsweise als Halteblech 6a ausgebildeten plattenförmigen Trägerelement 6, das mit der wannenförmigen Aufnahmemulde 7 für einen Kraftstoffbehälter versehen ist, kann insbesondere bei einem Treibgasstapler durch die tiefe Anordnung der Treibgasflasche 20a auf dem Gegengewicht 4 ein ergonomisch günstiger Wechsel der Treibgasflasche 20a erzielt werden, da eine volle Treibgasflasche 20a in die wannenförmige Aufnahmemulde 7 hineingehoben und durch die Schwerkraft positioniert werden kann bzw. eine leere Treibgasflasche 20a aus dieser herausgehoben werden kann.

Das beispielsweise von dem Halteblech 6a gebildete plattenförmige Trägerelement 6a ist auf einfache Weise herstellbar und ermöglicht bei identischem Aufbau auf einfache Weise die Anordnung unterschiedlicher Kraftstoffbehälter in der Aufnahmemulde 7 und somit auf der Oberseite des Gegengewichts 4. Bei einer Gabelstaplerflotte mit Treibgasstaplern und Dieselstaplern kann somit für die unterschiedlichen Kraftstoffbehälter, insbesondere einen Dieseltank, bei einem Dieselstapler bzw. einer Treibgasflasche oder einem Treibgastank bei einem Treibgasstapler, mit lediglich einer Variante des Trägerelements 6 bzw. des Halteblechs 6a und somit mit identischen Trägerelementes 6 bzw. Halteblechen 6a eine sichere und einfache Befestigung der unterschiedlichen Kraftstoffbehälter erzielt werden.

## Patentansprüche

1. Gegengewichtsgabelstapler (1) mit einem verbrennungsmotorischen Antriebssystem, einem Gegengewicht (4) und einem Kraftstoffbehälter, der auf dem Gegengewicht (4) angeordnet ist, und mit einer Halterung für den Kraftstoffbehälter, wobei die Halterung von einem plattenförmigen Trägerelement (6) gebildet Ist, In dem eine wannenförmige Aufnahmemulde (7) zur Aufnahme des Kraftstoffbehälters ausgebildetist, **dadurch gekennzeichnet, dass** das plattenförmige Trägerelement (6) eine obere Abdeckung und Verkleidung des Gegengewichts (4) bildet.

2. Gegengewichtsgabelstapler nach Anspruch 1, **dadurch gekennzeichnet, dass** das Trägerelement (6) als ein metallisches Halteblech (6a) ausgebildet ist.

3. Gegengewichtsgabelstapler nach Anspruch 1, **dadurch gekennzeichnet, dass** das Trägerelement (6) als ein Kunststoffträger oder als ein Verbundwerkstoffträger ausgebildet ist.

4. Gegengewichtsgabelstapler nach einem der Ansprüche 1 bis 3, **dadurch gekennzeichnet, dass** die wannenförmige Aufnahmemulde (7) einen im Wesentlichen kreissegmentförmigen Querschnitt aufweist.

5. Gegengewichtsgabelstapler nach einem der Ansprüche 1 bis 3, **dadurch gekennzeichnet, dass** die wannenförmige Aufnahmemulde (7) einen im Wesentlichen trapezförmigen Querschnitt aufweist.

6. Gegengewichtsgabelstapler nach Anspruch 1 oder 5, **dadurch gekennzeichnet, dass** in der Aufnahmemulde (7) zumindest zwei Auflager (10, 11) für den Kraftstoffbehälter ausgebildet sind.

7. Gegengewichtsgabelstapler nach Anspruch 6, **dadurch gekennzeichnet, dass** die Auflager (10, 11) von jeweils einer in Längsrichtung der Aufnahmemulde (7) verlaufenden Auflagerleiste gebildet sind.

8. Gegengewichtsgabelstapler nach Anspruch 6 oder 7, **dadurch gekennzeichnet, dass** an den Auflagern (10, 11) Dämpfungsmittel befestigbar sind.

9. Gegengewichtsgabelstapler nach einem der Ansprüche 1 bis 8, **dadurch gekennzeichnet, dass** das plattenförmige Trägerelement (6) an der Unterseite zumindest im Bereich des Kraftstoffbehälters mit Dämmmaterial versehen ist.

10. Gegengewichtsgabelstapler nach einem der Ansprüche 1 bis 9, **dadurch gekennzeichnet, dass** in dem plattenförmigen Trägerelement (6), insbesondere im tiefsten Punkt der wannenförmigen Aufnahmemulde (7), eine Leckagesicke (8) mit mindestens einer Ablauföffnung (9a; 9b) ausgebildet ist.

11. Gegengewichtsgabelstapler nach Anspruch 10, **dadurch gekennzeichnet, dass** die Leckagesicke (8) in der wannenförmigen Aufnahmemulde (7) des plattenförmigen Trägerelements (6) zwischen den beiden Auflagerleisten (10, 11) angeordnet ist.

12. Gegengewichtsgabelstapler nach einem der Ansprüche 1 bis 11, **dadurch gekennzeichnet, dass** das plattenförmige Trägerelement (6) an der Oberseite des Gegengewichts (4) angeordnet ist und das Gegengewicht (4) zumindest teilweise, insbesondere vollständig, abdeckt.

13. Gegengewichtsgabelstapler nach einem der Ansprüche 1 bis 12, **dadurch gekennzeichnet, dass** an dem plattenförmigen Trägerelement (6) mindestens eine Durchführungsausnehmung (12; 13; 14) für eine Auspuffanlage und/oder eine Luftansaugeinrichtung und/oder eine Kühlwasseranlage ausgebildet ist.

14. Gegengewichtsgabelstapler nach einem der Ansprüche 1 bis 13, **dadurch gekennzeichnet, dass** das plattenförmige Trägerelement (6) an dem Gegengewicht (4) lösbar befestigt ist, insbesondere mittels zumindest einer Schraubverbindung.

15. Gegengewichtsgabelstapler nach einem der Ansprüche 1 bis 14, **dadurch gekennzeichnet, dass** an dem plattenförmigen Trägerelement (6) mindestens eine Befestigungseinrichtung für den Kraftstoffbehälter befestigbar ist.

16. Gegengewichtsgabelstapler nach Anspruch 15, **dadurch gekennzeichnet, dass** die Befestigungseinrichtung von zumindest einem Spannband (21a; 21 b) gebildet ist, wobei das Spannband an dem plattenförmigen Trägerelement (6) einhängbar oder einfädelbar ist.

17. Gegengewichtsgabelstapler nach Anspruch 16, **dadurch gekennzeichnet, dass** das plattenförmige Trägerelement (6) zum Einhängen oder Einfädeln des Spannbandes (21a; 21b) mit langlochförmigen Ausnehmungen (15a, 15b; 16a, 16b; 19a, 19b) versehen ist

18. Gegengewichtsgabelstapler nach einem der Ansprüche 15 bis 17, **dadurch gekennzeichnet, dass** die Befestigungseinrichtung von mindestens einer Halteklammer (23a; 23b) gebildet ist, wobei die Halteklammer (23a; 23b) an dem plattenförmigen Trägerelement (6) lösbar befestigbar ist.

19. Gegengewichtsgabelstapler nach Anspruch 18, **dadurch gekennzeichnet, dass** der plattenförmige Trägerelement (6) zur Befestigung der Halteklammer (23a; 23b) mit einem Durchgangsloch (17a; 17b) für eine Verschraubung versehen ist.

20. Gegengewichtsgabelstapler nach einem der Ansprüche 1 bis 19, **dadurch gekennzeichnet, dass** der Kraftstoffbehälter als Treibgasflasche (20a) ausgebildet ist.

21. Gegengewichtsgabelstapler nach einem der Ansprüche 1 bis 19, **dadurch gekennzeichnet, dass** der Kraftstoffbehälter als Treibgastank(20b) ausgebildet ist.

22. Gegengewichtsgabelstapler nach einem der Ansprüche 1 bis 19, **dadurch gekennzeichnet, dass** der Kraftstoffbehälter von einem Kraftstofftank, insbesondere Dieseltank (22), gebildet ist.

23. Gegengewichtsgabelstaplerflotte umfassend zumindest einen Dieselstapler mit einem als Dieselmotor ausgebildeten Verbrennungsmotor und zumindest einen Treibgasstaplers mit einem als Treibgasmotor ausgebildeten Verbrennungsmotor, wobei die Gegengewichtsgabelstapler (1) jeweils ein Gegengewicht (4) aufweisen, **dadurch gekennzeichnet, dass** zur Befestigung eines Kraftstofftanks, insbesondere eines Dieseltanks (22), des Dieselstaplers und einer Treibgasflasche (20a) oder eines Treibgastanks (20b) des Treibgasstaplers ein Identisches plattenförmiges Trägerelement (6) gemäß einem der Ansprüche 1 bis 22 vorgesehen ist.

## Claims

1. Counterweight forklift truck (1) having an internal combustion engine drive system, a counterweight (4) and a fuel container which is arranged on the counterweight (4), and having a holder for the fuel container, wherein the holder is formed by a plate-shaped carrier element (6), in which a trough-shaped receiving cavity (7) for receiving the fuel container is formed, **characterized in that** the plate-shaped carrier element (6) forms an upper covering and cowling of the counterweight (4).

2. Counterweight forklift truck according to Claim 1, **characterized in that** the carrier element (6) is designed as a metallic holding plate (6a).

3. Counterweight forklift truck according to Claim 1, **characterized in that** the carrier element (6) is designed as a plastic carrier or as a composite material carrier.

4. Counterweight forklift truck according to one of Claims 1 to 3, **characterized in that** the trough-shaped receiving cavity (7) has a substantially circular segment-shaped cross section.

5. Counterweight forklift truck according to one of Claims 1 to 3, **characterized in that** the trough-shaped receiving cavity (7) has a substantially trapezoidal cross section.

6. Counterweight forklift truck according to Claim 1 or 5, **characterized in that** at least two supports (10, 11) for the fuel container are formed in the receiving cavity (7).

7. Counterweight forklift truck according to Claim 6, **characterized in that** the supports (10, 11) are formed by in each case one support strip extending in the longitudinal direction of the receiving cavity (7).

8. Counterweight forklift truck according to Claim 6 or 7, **characterized in that** damping means can be fastened to the supports (10, 11).

9. Counterweight forklift truck according to one of Claims 1 to 8, **characterized in that** the plate-shaped carrier element (6) is provided with insulating material on the underside, at least in the region of the fuel container.

10. Counterweight forklift truck according to one of Claims 1 to 9, **characterized in that** a leakage bead (8) with at least one drain opening (9a; 9b) is formed in the plate-shaped carrier element (6), in particular in the lowest point of the trough-shaped receiving cavity (7).

11. Counterweight forklift truck according to Claim 10, **characterized in that** the leakage bead (8) in the trough-shaped receiving cavity (7) of the plate-shaped carrier element (6) is arranged between the two support strips (10, 11).

12. Counterweight forklift truck according to one of Claims 1 to 11, **characterized in that** the plate-shaped carrier element (6) is arranged on the upper side of the counterweight (4) and covers the counterweight (4) at least partially, in particular completely.

13. Counterweight forklift truck according to one of Claims 1 to 12, **characterized in that** at least one leadthrough cutout (12; 13; 14) for an exhaust system and/or an air intake device and/or a cooling water system is formed on the plate-shaped carrier element (6).

14. Counterweight forklift truck according to one of Claims 1 to 13, **characterized in that** the plate-shaped carrier element (6) is detachably fastened to the counterweight (4) in particular by means of at least one screw connection.

15. Counterweight forklift truck according to one of Claims 1 to 14, **characterized in that** at least one fastening device for the fuel container can be fastened to the plate-shaped carrier element (6).

16. Counterweight forklift truck according to Claim 15, **characterized in that** the fastening device is formed by at least one tightening strap (21a; 21b), wherein the tightening strap can be suspended or threaded on the plate-shaped carrier element (6).

17. Counterweight forklift truck according to Claim 16, **characterized in that**, in order to suspend or thread the tightening strap (21a; 21b), the plate-shaped carrier element (6) is provided with slot-shaped cutouts (15a, 15b; 16a, 16b; 19a, 19b).

18. Counterweight forklift truck according to one of Claims 15 to 17, **characterized in that** the fastening device is formed by at least one holding clamp (23a; 23b), wherein the holding clamp (23a; 23b) can be detachably fastened to the plate-shaped carrier element (6).

19. Counterweight forklift truck according to Claim 18, **characterized in that**, in order to fasten the holding clamp (23a, 23b), the plate-shaped carrier element (6) is provided with a through hole (17a, 17b) for a screw connection.

20. Counterweight forklift truck according to one of Claims 1 to 19, **characterized in that** the fuel container is designed as an LPG cylinder (20a).

21. Counterweight forklift truck according to one of Claims 1 to 19, **characterized in that** the fuel container is designed as an LPG tank (20b).

22. Counterweight forklift truck according to one of Claims 1 to 19, **characterized in that** the fuel container is formed by a fuel tank, in particular a diesel tank (22).

23. Counterweight forklift truck fleet comprising at least one diesel forklift truck having an internal combustion engine designed as a diesel engine and at least one LPG forklift truck having an internal combustion engine designed as an LPG engine, wherein the counterweight forklift trucks (1) each have a counterweight (4), **characterized in that**, in order to fasten a fuel tank, in particular a diesel tank (22), of the diesel forklift truck and an LPG cylinder (20a) or an LPG tank (20b) of the LPG forklift truck, an identical plate-shaped carrier element (6) according to one of Claims 1 to 22 is provided.

## Revendications

1. Chariot élévateur à fourche à contrepoids (1) comprenant un système d'entraînement à moteur à combustion interne, un contrepoids (4) et un récipient de carburant disposé sur le contrepoids (4), et un support pour le récipient de carburant, le support étant formé par un élément de support (6) en forme de plaque dans lequel est réalisé un creux de réception (7) en forme de cuvette pour recevoir le récipient de carburant, **caractérisé en ce que** l'élément de support (6) en forme de plaque forme un recouvrement supérieur et un habillage du contrepoids (4).

2. Chariot élévateur à fourche à contrepoids selon la revendication 1, **caractérisé en ce que** l'élément de support (6) est réalisé sous forme de tôle de support métallique (6a).

3. Chariot élévateur à fourche à contrepoids selon la revendication 1, **caractérisé en ce que** l'élément de support (6) est réalisé sous forme de support en plastique ou de support en matériau composite.

4. Chariot élévateur à fourche à contrepoids selon l'une quelconque des revendications 1 à 3, **caractérisé en ce que** le creux de réception (7) en forme de cuvette présente une section transversale essentiellement en forme de segment de cercle.

5. Chariot élévateur à fourche à contrepoids selon l'une quelconque des revendications 1 à 3, **caractérisé en ce que** le creux de réception (7) en forme de cuvette présente une section transversale essentiellement trapézoïdale.

6. Chariot élévateur à fourche à contrepoids selon la revendication 1 ou 5, **caractérisé en ce qu'**au moins deux appuis (10, 11) pour le récipient de carburant sont réalisés dans le creux de réception (7).

7. Chariot élévateur à fourche à contrepoids selon la revendication 6, **caractérisé en ce que** les appuis (10, 11) sont formés par une baguette d'appui respective s'étendant dans la direction longitudinale du creux de réception (7).

8. Chariot élévateur à fourche à contrepoids selon la revendication 6 ou 7, **caractérisé en ce que** des moyens amortisseurs peuvent être fixés sur les appuis (10, 11).

9. Chariot élévateur à fourche à contrepoids selon l'une quelconque des revendications 1 à 8, **caractérisé en ce que** l'élément de support (6) en forme de plaque est pourvu de matériau amortissant sur le côté inférieur, au moins dans la région du récipient de carburant.

10. Chariot élévateur à fourche à contrepoids selon l'une quelconque des revendications 1 à 9, **caractérisé en ce qu'**une moulure de fuite (8) avec au moins une ouverture d'écoulement (9a ; 9b) est réalisée dans l'élément de support (6) en forme de plaque, notamment dans le point le plus bas du creux de réception (7) en forme de cuvette.

11. Chariot élévateur à fourche à contrepoids selon la revendication 10, **caractérisé en ce que** la moulure de fuite (8) dans le creux de réception (7) en forme de cuvette de l'élément de support (6) en forme de plaque est disposée entre les deux baguettes d'appui (10, 11).

12. Chariot élévateur à fourche à contrepoids selon l'une quelconque des revendications 1 à 11, **caractérisé en ce que** l'élément de support (6) en forme de plaque est disposé sur le côté supérieur du contrepoids (4) et recouvre le contrepoids (4) au moins partiellement, notamment complètement.

13. Chariot élévateur à fourche à contrepoids selon l'une quelconque des revendications 1 à 12, **caractérisé en ce qu'**au moins un évidement de passage (12 ; 13 ; 14) pour une installation d'échappement et/ou un dispositif d'aspiration d'air et/ou une installation d'eau de refroidissement est réalisé sur l'élément de support (6) en forme de plaque.

14. Chariot élévateur à fourche à contrepoids selon l'une quelconque des revendications 1 à 13, **caractérisé en ce que** l'élément de support (6) en forme de plaque est fixé de manière amovible sur le contrepoids (4), notamment au moyen d'au moins une connexion vissée.

15. Chariot élévateur à fourche à contrepoids selon l'une quelconque des revendications 1 à 14, **caractérisé en ce qu'**au moins un dispositif de fixation pour le récipient de carburant peut être fixé sur l'élément de support (6) en forme de plaque.

16. Chariot élévateur à fourche à contrepoids selon la revendication 15, **caractérisé en ce que** le dispositif de fixation est formé par au moins une bande de serrage (21a ; 21b), la bande de serrage pouvant être accrochée ou enfilée sur l'élément de support (6) en forme de plaque.

17. Chariot élévateur à fourche à contrepoids selon la revendication 16, **caractérisé en ce que** l'élément de support (6) en forme de plaque est pourvu d'évidements en forme de trous oblongs (15a, 15b ; 16a, 16b ; 19a, 19b) pour accrocher ou enfiler la bande de serrage (21a ; 21b).

18. Chariot élévateur à fourche à contrepoids selon l'une quelconque des revendications 15 à 17, **caractérisé en ce que** le dispositif de fixation est formé par au moins une pince de retenue (23a ; 23b), la pince de retenue (23a ; 23b) pouvant être fixée de manière amovible à l'élément de support (6) en forme de plaque.

19. Chariot élévateur à fourche à contrepoids selon la revendication 18, **caractérisé en ce que** l'élément de support (6) en forme de plaque est pourvu d'un trou de passage (17a ; 17b) pour un vissage, en vue de la fixation de la pince de retenue (23a ; 23b).

20. Chariot élévateur à fourche à contrepoids selon l'une quelconque des revendications 1 à 19, **caractérisé en ce que** le récipient de carburant est réalisé sous forme de bouteille de gaz propulseur (20a).

21. Chariot élévateur à fourche à contrepoids selon l'une quelconque des revendications 1 à 19, **caractérisé en ce que** le récipient de carburant est réalisé sous forme de réservoir à gaz propulseur (20b).

22. Chariot élévateur à fourche à contrepoids selon l'une quelconque des revendications 1 à 19, **caractérisé en ce que** le récipient de carburant est formé par un réservoir de carburant, notamment un réservoir de diesel (22).

23. Flotte de chariots élévateurs à fourche à contrepoids, comprenant au moins un chariot élévateur diesel avec un moteur à combustion interne réalisé sous forme de moteur diesel et au moins un chariot élévateur à gaz propulseur avec un moteur à combustion interne réalisé sous forme de moteur à gaz propulseur, les chariots élévateurs à fourche à contrepoids (1) présentant à chaque fois un contrepoids (4), **caractérisée en ce que** pour la fixation d'un réservoir de carburant, en particulier d'un réservoir diesel (22) du chariot élévateur diesel et d'une bouteille de gaz propulseur (20a) ou d'un réservoir de gaz propulseur (20b) du chariot élévateur à gaz propulseur, il est prévu un élément de support (6) en forme de plaque identique, selon l'une quelconque des revendications 1 à 22.
